# FASCICULE DE BREVET EUROPEEN

(11) **EP 3 307 854 B1**
(45) Date de publication et mention de la délivrance du brevet: **03.01.2024**
(21) Numéro de dépôt: 16739419.6
(22) Date de dépôt: 10.06.2016
(51) Int. Cl.: C10L 5/44, C10L 9/08, B01D 21/26, C12M 1/00, F26B 1/00, F26B 5/08, F26B 3/10

(54) **PROCEDE ET INSTALLATION DE PREPARATION DE BIOMASSE**
VERFAHREN UND ANLAGE ZUR HERSTELLUNG VON BIOMASSE
METHOD AND FACILITY FOR PREPARING BIOMASS

(30) Priorité: 11.06.2015 LU 92738
(43) Date de publication de la demande: 18.04.2018
(73) Titulaire: Biocarbon Industries Sarl, 2227 Luxembourg (LU)
(72) Inventeur: VIESLET, Jean-Paul, 4000 Liège (BE)
(74) Mandataire: Germain Maureau
(86) Numéro de dépôt international: PCT/EP2016/063375
(87) Numéro de publication internationale: WO 2016/198653

(56) Documents cités:
- WO-A2-2004/072211
- FR-A- 1 460 736
- FR-A1- 2 449 860
- US-A- 5 958 233
- Arden Just ET AL: "Attrition Dry Milling In Continous And Batch Modes", , 1 janvier 1997 (1997-01-01), XP055297464, Extrait de l'Internet: URL:https://web.archive.org/web/2008120910 4034/http://www.unionprocess.com/tech_pape rs/dry_milling.pdf [extrait le 2016-08-24]
- Siebtechnik: "Centrifuges", , 1 juin 2014 (2014-06-01), XP055297650, Extrait de l'Internet: URL:http://www.siebtechnik-gmbh.de/fileadm in/user_upload/PDF/en/Abt3/wb210e.pdf [extrait le 2016-08-25]
- Atritor: "Broyeurs-Sécheurs Séries 'A' et 'B'", , 5 octobre 2014 (2014-10-05), XP055297510, Extrait de l'Internet: URL:https://web.archive.org/web/2014100517 3645/http://www.atritor.com/literature/fr/ atritor-main_fr.pdf [extrait le 2016-08-25]

## Description

La présente invention est relative à un procédé de préparation, notamment d'extraction de liquide, de biomasse en vue de l'utilisation ultérieure, dans son état ou après affinage granulométrique, dans un procédé tel qu'un procédé de torréfaction, de carbonisation ou de production de granules de combustible, dans un procédé de production de granules d'amélioration des sols, ou dans un procédé de fabrication de matériaux de construction et/ou de génie civil, ou dans un procédé de préparation de produits agro-alimentaires, par exemple. Elle concerne également une installation pour la mise en oeuvre d'un tel procédé.

Dans le cadre de la présente description, le terme « biomasse » est utilisé pour désigner l'ensemble de la matière organique d'origine végétale lignocellulosique, y compris notamment le bois et les résidus de cultures lignocellulosiques, comme la paille ou la bagasse de canne à sucre par exemple.

De nombreux procédés de transformation de biomasse lignocellulosique en combustibles sont connus. La torréfaction de biomasse notamment consiste à la chauffer à une température comprise entre 180°C et 300°C dans une atmosphère réductrice. On obtient alors un produit friable ayant un PCI accru. On connaît également la transformation de copeaux de bois ou autres biomasses lignocellulosiques en granules combustibles. Il est également connu de fabriquer des matériaux de construction ou de génie civil à l'aide de biomasse cellulosique, comme des panneaux de particules, panneaux OSB, des éléments en béton hydraulique, comme des parpaings etc. Ces procédés exigent tous un séchage approprié de la biomasse ainsi qu'un réglage approprié de sa granulométrie avant utilisation ultérieure, afin d'être efficaces.

Il est connu que le séchage est une opération qui consomme beaucoup d'énergie. Afin de rendre les procédés de traitement de biomasse économiquement rentables, et afin de réduire la consommation énergétique globale pour la transformation de biomasse, il y a un intérêt certain à agir sur l'opération de séchage. On sait aussi que l'efficacité de séchage est liée à la granulométrie des particules à sécher : plus la dimension des particules est élevée, plus il est difficile d'en extraire l'eau. Néanmoins, une granulométrie trop fine risque de poser des problèmes pratiques tant dans les opérations de séchage que les opérations de traitement et/ou transformation ultérieures. L'état de la technique relatif au séchage de biomasse inclut les documents suivants :
- "Attrition Dry Milling In Continuous And Batch Modes", Adren Just et al.;
- "Centrifuges", Siebtechnik;
- "Broyeurs-Sécheurs Séries 'A' et 'B', Atritor.

On sait que les matières organiques végétales lignocellulosiques contiennent de l'eau dite libre, de l'eau dite liée et de l'eau dite constitutive. L'eau libre se dégage spontanément par évaporation ; notamment dans l'action du mouvement de l'air ; il y a toutefois lieu de noter que le séchage de bois en buche par par exemple prend de 1 à 3 ans pour évacuer l'eau libre et de l'eau liée à un taux d'humidité résiduel acceptable du bois. On conçoit que l'eau liée est constituée par la fraction d'eau intégrée aux structures moléculaires de la matière, du bois notamment, essentiellement déterminées par l'hémicellulose et la cellulose, y compris les macropores et les micropores selon qu'il s'agisse de bois tendres ou plus durs. Pour ce qui concerne l'eau constitutive, celle-ci ne peut être extraite que moyennant des modifications essentiellement irréversibles de la matière. A titre tout à fait indicatif, pour une teneur en eau de l'ordre de 50 - 55 % en poids dans la biomasse, l'eau libre correspond à une fraction allant jusqu'à 25% en poids ; l'eau liée correspond à 10 - 35 % en poids et l'eau constitutive à 0 - 10 % en poids.

Les procédés généralement utilisés pour le séchage impliquent, en général, principalement l'utilisation d'un gaz chaud pour extraire l'eau de la biomasse portée à une granulométrie qui favorise l'extraction d'eau. Ainsi, le document US-4552863 décrit un procédé de production de granules de charbon actif. Le procédé comporte une étape de production d'une poudre de bois, une étape de séchage à un taux d'humidité de l'ordre de 4-5 % en poids, une étape de génération de granules et la carbonisation des granules suivie d'une activation des granules carbonisées à l'aide de vapeur d'eau à température élevée. Le document US-8388813 aussi décrit un procédé de traitement de biomasse, comportant la torréfaction ou carbonisation. L'étape de séchage est effectuée à l'aide d'un tambour rotatif parcouru par un gaz chaud à une température de l'ordre 315 - 425 °C sur une matière ayant une granulométrie de l'ordre du cm pour obtenir un taux d'humidité résiduel de l'ordre de 2 - 4 % en poids. Le document DE-102011016003 décrit une installation portable pour la torréfaction de biomasse, dans laquelle des particules de bois sont transportées pneumatiquement dans un cyclone de séchage qui réduit l'humidité d'environ 50 à environ 10 % en poids. WO2013/003615 décrit un réacteur vertical pour la torréfaction de biomasse, dans lequel la biomasse broyée est admise à la partie supérieure et passe successivement sur des tamis agencés les uns en-dessous des autres. La biomasse admise est séchée par des courants de gaz chauds traversant les étages de séchage. Finalement, le document CA-2710625 (ou EP-2287278) décrit une installation de torréfaction de biomasse comportant un appareil de séchage à gaz chaud qui est capable d'extraire 85 à 98 % de l'humidité présente dans la biomasse.

Aussi dans les procédés de production de granules de bois, communément appelés pellets, est-il connu de sécher les particules de biomasse avant compactage et/ou extrusion.

Le document DE-102010032610 concerne plus particulièrement une installation de séchage de biomasse, qui comporte plusieurs bandes transporteuses superposées, une bande transporteuse supérieure déversant la matière transportée sur une bande transporteuse inférieure, les bandes transporteuses étant agencées dans un volume fermé chauffé par des éléments chauffants agencés au fond dudit volume. Le document DE102006061340 aussi décrit une installation de production de pellets, y compris un équipement de séchage qui à l'aide de ventilateurs fait passer des gaz chauds au travers d'une vis transporteuse verticale chargée de biomasse.

On comprendra aisément que ces moyens de séchage sont de gros consommateurs d'énergie. Lorsque les gaz de séchage sont à température élevée, le séchage est efficace, mais une telle façon de procéder est accompagnée d'un risque d'inflammation de la matière. Lorsque les gaz de séchage sont à basse température, de l'ordre de 140°C et moins, on peut évidemment utiliser des thermies basses, mais on considère, en général, qu'il faut au moins 1,1 MW/tonne d'eau évaporée.

Finalement, le document WO2011/131869 décrit un procédé de fabrication de pellets dans lequel le séchage de la biomasse exige une quantité d'énergie réduite et s'effectue en même temps que la formation des pastilles, à une température réduite de 65 à 95°C et ensuite dans un déshydrateur qui permet de réduire le taux d'humidité des pellets à environ 10%.

Le document JP2006/273970 concerne la préparation de combustible destiné à la fabrication de clinker. Le combustible comporte des particules fines de charbon et de biomasse. Les particules ou chips de biomasse ayant un taux d'humidité de l'ordre de 25 % en poids et une dimension allant jusqu'à 40 mm et le charbon ayant un taux d'humidité de l'ordre 9 % en poids et des particules allant jusqu'à 40 mm avec un diamètre moyen de l'ordre de 25 mm sont séchés et broyés en mélange. Les gaz chauds à une température de 250 - 500 °C de l'installation de production de clinker sont utilisés pour le séchage. Les particules sont broyées de manière à obtenir une fraction de particules de taille supérieure à 90 µm allant de 20 à 50 % en poids, qui sont séparées. On obtient un combustible à particules fines dont l'inflammabilité est proche de celle de la poudre de charbon et qui permet la récupération de l'énergie calorifique contenue dans la biomasse et qui est injecté comme combustible dans le four rotatif à clinker, et des particules plus grossières injectées dans le brûleur de la précalcination. Le broyeur peut être un broyeur à cylindres ou à boulets et la séparation s'effectue sur un tamis, par exemple un tamis vibrant.

Le document US-4589357 concerne aussi la préparation de combustibles à base de biomasse, destiné à être brûlé dans un brûleur fonctionnant par injection de matières combustibles en suspension dans de l'air. On cherche à réduire les dépenses énergétiques pour le broyage de la biomasse et on y propose un combustible bimodal comportant des particules broyées à moins de 100 µm qui servent à enflammer la fraction principale du combustible qui elle comporte des particules plus grossières néanmoins inférieures à 10 mm. Les particules peuvent être broyées dans divers types de broyeurs et on mentionne notamment les broyeurs par attrition. Le document ne décrit pas comment sécher la matière afin d'obtenir le taux d'hygrométrie voulu.

Le document US-5662810 concerne un procédé et un dispositif de déshydratation de boues, notamment de boues dérivées de procédés de production d'alcool à partir de grains et de fibres végétales. La séparation liquide-solides s'effectue par centrifugation sur des tamis, ou dans des presses à vis. On produit un gâteau ayant 33 - 34 % de matière sèche et donc encore toujours plus de 65 % d'eau.

Le document WO2004/072211 concerne également un combustible à base de biomasse comportant des particules finement broyées et séchées de bois, d'écorce, de charbon de bois ou autres matières cellulosiques, humidifiée à l'aide d'une huile ou d'un alcool végétale. Si on y incorpore du charbon de bois, celui-ci est obtenu par chauffage à environ 280 °C. Pour ce qui concerne les particules cellulosiques, celles-ci sont éventuellement préséchées et ensuite centrifugées à une température telle qu'on puisse en extraire des goudrons. Il s'agit en réalité d'une forme de torréfaction partielle nécessitant du temps et de l'énergie pour atteindre une certaine séparation et obtenir des produits combustibles. Les particules sont ensuite broyées à une dimension de particules de moins de 500 µm. Elles présentent un taux hygrométrique peu élevé de l'ordre de 6 % en poids.

Dans certaines utilisations de biomasse, il peut être requis de la tremper dans un solvant, comme de l'eau ou autre, pour ensuite la sécher et/ou en extraire des substances voulues.

Il résulte de ce qui précède que l'étape d'extraction de liquide et plus particulièrement d'eau mérite une attention toute particulière. La présente invention vise à améliorer l'extraction d'eau, plus particulièrement le séchage de biomasse en réduisant la consommation énergétique nécessaire à obtenir un taux de liquide résiduel acceptable, plus particulièrement de l'ordre de 2 à 12 % en poids dans la biomasse entrant dans l'étape de mise en forme et/ou transformation ultérieure, comme la production de granulés à divers usages, comme les granules de combustible ou les granules d'amélioration des sols, la torréfaction ou carbonisation, la production de matériaux de construction ou la production de produits agro-alimentaires.

La présente invention vise plus particulièrement à fournir un procédé de préparation amélioré, notamment d'extraction mécanique d'eau de la biomasse lignocellulosique en vue de son utilisation dans diverses applications, comme les matériaux de construction, les panneaux de particules, sa mise en forme en granules pour divers usages ou sa transformation, notamment par torréfaction ou sa transformation en charbon de bois, ou la préparation de compléments nutritifs ou autres produits agro-alimentaires.

Elle vise également à fournir une installation pour la mise en oeuvre du procédé amélioré.

Selon un premier aspect, la présente invention fournit un procédé de préparation de biomasse lignocellulosique selon la revendication 1.

Il est bien entendu que la biomasse ainsi alimentée peut avoir subi d'autres traitements, comme un déchiquetage afin de porter la biomasse à une dimension voulue, optimale pour le procédé de l'invention, et/ou un chauffage à température adéquate. La biomasse peut encore avoir été soumise à une aspersion et/ou immersion dans un fluide, comme un solvant ou de l'eau à une température adéquate afin de favoriser l'ouverture des pores de la matière. Ce prétraitement peut faciliter l'extraction de liquide dans le procédé de l'invention.

La centrifugation est bien connue en tant que telle mais n'a pas trouvé application pour l'extraction d'eau de la biomasse solide, plus particulièrement pour le séchage de biomasse. Les applications connues se limitent à séparer la biomasse de l'eau qui la tient en suspension, comme le séchage de boues. Une autre application connue de la centrifugation de biomasse cellulosique consiste à en extraire des goudrons à température assez élevée. Il est apparu que cette technique de centrifugation appliquée sur la biomasse, éventuellement préalablement rincée ou traitée avec de l'eau ou tout autre fluide, permet d'en extraire l'eau de façon économique moyennant une dépense énergétique réduite.

Avantageusement, la centrifugation est effectuée sur une biomasse de granulométrie assez grossière, notamment dans une essoreuse à tamis tournant à une vitesse générant une force centrifuge supérieure à 1000 G, avantageusement supérieure à 1200 G, de préférence supérieure à 1500 G, tout particulièrement supérieure à 2500 G. Il est bien entendu que la limite supérieure est dictée par des considérations de construction mécanique et partant par des considérations économiques. En pratique, il est tout à fait possible d'atteindre des forces de cet ordre à des prix acceptables. De préférence, la centrifugation est effectuée dans une essoreuse à tamis à axe horizontal, de préférence un tamis tronconique, alimentée en continu par un flux de biomasse, notamment un flux fluide, par exemple d'air, chargé de biomasse, éventuellement aidé par une vis d'alimentation, à l'endroit du petit diamètre, la biomasse étant transportée le long du tamis par une vis et la biomasse à humidité réduite étant récupérée à l'endroit du grand diamètre. Il s'agit là d'une centrifugeuse du type Conturbex (nom commercial de Siebtechnik) connue notamment pour la séparation physique de solides et liquides dans l'industrie chimique, alimentaire et autres, mais normalement pas utilisée pour l'extraction de liquide et notamment d'eau, plus particulièrement le séchage de biomasse. Le transport le long du tamis idéalement tronconique a pour effet de soumettre la biomasse à des forces centrifuges grandissantes. Il est bien entendu que le choix de l'angle de fuite du tamis tronconique permet d'adapter la centrifugation de la biomasse aux résultats recherchés. Avantageusement, la vitesse de rotation de la vis de transport est différente de la vitesse de rotation du tamis et est réglable de manière à régler ainsi le temps de séjour de la matière dans la centrifugeuse, permettant ainsi encore de pousser l'extraction de liquide plus ou moins fort. Avantageusement, la biomasse est transportée par un courant d'air chaud à une température inférieure à 200 °C, de préférence inférieure à 140°C, plus particulièrement comprise entre la température ambiante et 95 °C, tout particulièrement entre 40 et 95 °C, et éventuellement assisté par une vis d'alimentation. On a constaté qu'une étape d'essorage dans un tel équipement, permet d'obtenir une réduction du taux d'humidité de la biomasse de 8 à 20%, pour la porter à moins de 50%, avantageusement moins de 45%, de préférence moins de 40, 35 ou même 30 % en poids; et ce moyennant une dépense énergétique réduite. Il y a lieu de noter qu'il était inattendu d'obtenir non seulement une séparation solide-liquide, mais une extraction d'une partie d'eau liée aussi importante moyennant un traitement essentiellement mécanique à température réduite. A ces températures, on empêche la formation et/ou l'extraction de goudrons et autres liqueurs. On pense que ce résultat surprenant peut résulter du fait que lors du passage de la température ambiante dans les gaz chauds de transport, les pores des particules relativement grossières de biomasse, et notamment de bois, se dilatent et libèrent ainsi par essorage une quantité significative d'eau liée. Au vu du bilan énergétique avantageux de cette opération pratiquée sur de la biomasse de granulométrie assez grossière, il est avantageux de pousser l'essorage assez loin sans pour autant affecter la fiabilité mécanique et économique de l'opération.

On a, par ailleurs, constaté que la dimension des particules peut être assez grossière sans pour autant significativement influencer le résultat d'essorage de façon négative. Notamment une centrifugeuse du type décrit ci-dessus offre une flexibilité de réglage de la force centrifuge et/ou du temps de séjour telle qu'elle peut traiter des biomasses présentant une large gamme de granulométries différentes. En pratique, essentiellement pour des raisons économiques et de disponibilité, on fonctionne avec des particules de biomasse déchiquetées de type chips. Les chips peuvent présenter une dimension maximum allant jusqu'à 100 mm ou 63 mm avec une épaisseur de 0.5 à 13 mm, selon les dimensions de machine utilisée ; on tiendra compte ici notamment des dimensions de la vis de transport. Les criblages allant de P16 à P100 selon la norme EN14961 peuvent donc convenir sans difficulté. Le choix de la granulométrie de la biomasse alimentée dans le procédé de l'invention dépend toutefois de la granulométrie recherchée à la sortie du procédé, en vue des étapes de mise en forme et/ou transformation ultérieures.

La biomasse à teneur en eau réduite est ensuite soumise à une opération de broyage-séchage par attrition. Le broyage-séchage par attrition à son tour réduit la taille des particules de biomasse admises dans l'étape de broyage-séchage par attrition, et par ailleurs sèche à coeur la biomasse par extraction de liquide et notamment d'eau, suite notamment à l'échauffement interne généré par le broyage et l'attrition. Le broyage-séchage est avantageusement effectué dans un broyeur par attrition du type Attritor (dénomination commerciale) comportant un tambour plat fixe supportant les organes de broyage fixes sur ses deux flancs et un disque tournant dans ledit tambour, définissant ainsi de part et d'autre une première cage et une deuxième cage, et supportant les organes de broyage mobiles, le disque tournant à des vitesses de l'ordre de 500 à 3500 t/min, de préférence de l'ordre de 700 à 1900 t/min. Ce type de broyeur-attriteur est connu, notamment dans le broyage de charbon et l'industrie minérale et chimique. La matière est amenée par un flux fluide, par exemple de gaz ou d'air, à proximité de l'axe de rotation, dans la première cage, aussi appelée cage d'émottage, broyée grossièrement dans celle-ci et transportée vers la périphérie du tambour pour contourner le disque et passer dans la deuxième cage, pour finalement être expulsée de la deuxième cage par le flux fluide à proximité de l'axe de rotation. La sortie est avantageusement équipée d'un diaphragme filtrant qui laisse passer les particules ayant le diamètre voulu et maintient dans la deuxième cage les particules plus grossières qui y seront broyées jusqu'à atteindre elles aussi les dimensions voulues. Dans la deuxième cage, le flux fluide de transport tend à amener les produits vers la sortie de déchargement à proximité de l'axe, et les forces centrifuges induites par la rotation du disque muni de broches de broyage tendent à repousser les particules grossières vers la périphérie du tambour. Ces forces contraires créent une suspension de produit dans le gaz de transport qui est fortement agitée par les broches. Le produit est ainsi broyé notamment par frottement des particules entre elles. Pour les particules les plus fines, la force d'entrainement due au flux fluide devient dominante et elles sont entrainées vers la sortie. Cette opération peut traiter une grande variété de dimensions de particules, notamment des biomasses déchiquetées plus grossièrement, ceci notamment en fonction de la dimension de l'équipement en amont.

Le broyage par attrition est, en effet connu, mais n'a, à ce jour, pas trouvé application pour sécher des biomasses cellulosiques solides de bonnes dimensions allant jusqu'à environ 100 mm par extraction d'eau de la matière elle-même. Les applications connues se rapportent au traitement de boues de biomasse, de digestats et distillats visant à séparer les matières solides des liquides.

Lorsque la matière est chargée dans le broyeur sécheur par attrition à l'aide d'un courant gazeux chaud, le rendement de séchage résultant de l'attrition est encore amélioré. Selon une forme d'exécution, on peut utiliser de l'air chaud à cet effet, de préférence à basse température, notamment une température inférieure à 200 °C, de préférence inférieure à 145°C, plus particulièrement comprise entre la température ambiante et 95 °C, tout particulièrement entre 40 et 95°C. Cette forme d'exécution permet d'utiliser des thermies peu élevées et partant assez économiques. Selon une autre forme d'exécution, on peut utiliser des gaz de combustion, notamment à des températures de l'ordre de 250 à 600 °C et donc à de très faibles taux ou même en absence d'oxygène. Cette forme d'exécution a l'avantage de récupérer de l'énergie sur les fumées et de constituer une étape de filtration de celles-ci. L'étape de broyage-séchage par attrition réduit avantageusement le taux d'humidité de la biomasse de 8 à 30 % en poids, de préférence de 10 à 25 % en poids, plus particulièrement 12 à 22 % en poids.

Comme déjà mentionné, l'efficacité de la déshydratation dépend dans une large mesure de la taille des particules, autrement dit de la granulométrie. En ce qui concerne la taille des particules, on est évidemment tenu par les exigences des étapes de procédé ultérieures.

Selon une forme d'exécution préférée, le procédé de l'invention comporte encore une étape de séchage préalable à l'aide d'un gaz chaud à basse température, notamment à moins de 200°C, de préférence à moins de 140°C, entre la centrifugation et le broyage-séchage par attrition. Cette étape de séchage à basse température est avantageusement conçue pour réduire le taux d'humidité de 10 à 20 % en poids.

Cette étape de séchage peut s'effectuer dans divers équipements. Selon une première variante, on peut sécher la biomasse sur une dalle active, de préférence automatisée. Par dalle active on entend un fond permettant l'entassement de la biomasse sur une hauteur de quelques centaines de millimètres à environ 3200 mm, le tas de biomasse étant remué ou brassé mécaniquement afin d'y faire pénétrer de l'air capable d'entrainer une quantité significative d'eau. On a obtenu de bons résultats avec des couches de matières allant jusqu'à 3000 mm. De préférence, cet air est à une température légèrement supérieure à la température ambiante. Le brassage ou remuage peut s'effectuer à l'aide d'un cylindre rotatif à palettes passant dans le tas de matière. Cette étape permet de réduire la teneur en eau de 5 à 20 % en poids, de préférence 10 à 15% en poids.

Selon une autre variante, on peut prévoir une étape de séchage intermédiaire dans une installation à tapis transporteurs superposés traversés par un courant d'air chaud ascendant. Dans ce genre d'installation, deux ou plus de deux tapis transporteurs sont superposés et un tapis supérieur déverse la biomasse sur un tapis inférieur et le dernier tapis décharge la biomasse dans l'équipement en aval. Un courant d'air chaud est envoyé par le bas, traverse le tapis transporteur inférieur et le tas de biomasse qui y est déposé et ensuite le tapis supérieur et la biomasse qui y est déposée etc et emporte avec lui de l'eau contenue dans celle-ci. L'air est avantageusement à une température inférieure à 200°C, de préférence inférieure à 140°C, plus particulièrement comprise entre la température ambiante et 95°C, tout particulièrement entre 85 et 95°C et utilise donc des thermies peu élevées.

Selon encore une autre variante du procédé de l'invention, on peut effectuer ce séchage intermédiaire dans des caissons à fond mouvant. Il s'agit de caissons comportant un fond ajouré, par exemple en métal déployé ou macro-perforé, constitué de divers éléments longitudinaux qui se déplacent chacun indépendamment dans un mouvement alternatif longitudinal, entrainant ainsi la biomasse dans un mouvement longitudinal. Les éléments longitudinaux ajourés sont traversés par un courant d'air chaud à thermies basses qui traverse la biomasse entassée pour la sécher.

Finalement, et si de besoin, on peut encore prévoir une étape de séchage d'appoint par gaz chaud à basse température, notamment inférieure à 200°C, de préférence inférieure à 140°C, plus particulièrement comprise entre la température ambiante et 95 °C, tout particulièrement entre 40 et 95 °C, afin d'amener la biomasse au taux hygrométrique voulu. Cette étape permet aussi un dosage de l'alimentation des procédés suivants. De préférence, cette étape sera effectuée dans un dispositif à lit fluidisé, de préférence un dispositif à lit fluidisé oscillo-vibrant.

Comme déjà mentionné, le procédé de l'invention concerne la préparation de biomasse, notamment par extraction d'eau, en vue de l'utilisation ultérieure, dans son état ou après affinage granulométrique. L'utilisation ultérieure peut consister en un procédé de transformation, ou encore en un procédé de mise en forme, ou encore en un procédé de fabrication de matériaux de construction et/ou de génie civil ou de produits agro-alimentaires. Par mise en forme, on entend notamment le formage de granules ou bûchettes combustibles selon des techniques connues en soi, comme par exemple le compactage, l'extrusion en filière ou autres, mais aussi le formage de granules pour d'autres applications spécifiques. Par transformation, on entend notamment la torréfaction ou carbonisation, par exemple pour la production de charbon de bois. Pour la production de panneaux de particules ou matériaux de construction, tel des parpaings, la biomasse est mélangée avec un liant et mise en oeuvre selon des procédés connus en soi. Dans le cas de la production de produits agro-alimentaires, on mélange les biomasses fibreuses avec des d'autres composants et/ou aliments et on met le mélange éventuellement en forme, notamment en forme de granules.

On a constaté que le procédé de l'invention, et tout particulièrement le procédé de préparation comportant une centrifugation suivie d'un broyage-séchage, permet d'obtenir une biomasse à un taux hygrométrique voulu tout en dépensant moins d'énergie que par les procédés classiques. En partant d'une biomasse de taille assez grossière et à un taux hygrométrique d'environ 55 % en poids, on peut obtenir une biomasse ayant une granulométrie de l'ordre du millimètre et un taux hygrométrique inférieur à 15 % en poids, inférieur à 8 % en poids ou même inférieur à 4 % ou 3 % en poids tout en ne consommant que de faibles quantités d'énergie, c'est-à-dire des quantités sensiblement inférieures à celles couramment utilisées par les procédés de séchage classiques. On a observé des économies d'énergie globale de l'ordre de 20 à 60 %, c'est-à-dire sur le procédé complet de séchage et broyage par exemple. Il est bien entendu que pour une utilisation de la biomasse ainsi traitée dans une opération de mise en forme, comme une granulation en filière, il peut être avantageux de maintenir un taux d'humidité plus élevé de l'ordre de 10 à 12 % en poids, sachant qu'il y a lieu de maintenir une fluidité de la matière adaptée au procédé de granulation et/ou d'agglomération et que les frottements notamment en filière génèrent encore une augmentation de température qui peut être mise à profit pour l'extraction d'eau.

Selon un autre aspect, l'invention concerne une installation de préparation de biomasse lignocellulosique conforme à la revendication 12, notamment par extraction de liquide et notamment d'eau, et éventuellement par affinage granulométrique, en vue de l'utilisation ultérieure notamment dans un procédé de torréfaction, de carbonisation et/ou de mise en forme, notamment de production de granules de combustible ou de granules d'amélioration des sols, un procédé de fabrication de matériaux de construction et de génie civil, ou un procédé de préparation de produits agro-alimentaires, comportant au moins une déchiqueteuse de biomasse à granulométrie voulue et une essoreuse à tamis et un broyeur-sécheur par attrition.

Selon un autre aspect de l'invention, celle-ci concerne encore une installation pour la préparation de biomasse lignocellulosique conforme à la revendication 12, notamment par extraction d'eau, et affinage granulométrique, en vue de l'utilisation ultérieure notamment dans un procédé de torréfaction, de carbonisation et/ou de mise en forme, notamment de production de granules de combustible ou de granules d'amélioration des sols, ou encore un procédé de fabrication de matériaux de construction et de génie civil, ou un procédé de préparation de produits agro-alimentaires, comportant au moins une essoreuse à tamis et un broyeur-sécheur par attrition.

L'essoreuse à tamis tourne avantageusement à une vitesse de rotation telle qu'elle produit une force centrifuge supérieure à 1000 G, avantageusement supérieure à 1200 G, de préférence supérieure à 1500 G, tout particulièrement supérieure à 2500 G. Elle consiste avantageusement en une essoreuse du type Conturbex déjà décrite ci-dessus qui comporte un tamis de préférence tronconique à axe horizontal, alimenté en continu en biomasse, de préférence par un flux fluide, par exemple d'air, chargé de biomasse, à l'endroit du petit diamètre, la biomasse à humidité réduite étant récupérée à l'endroit du grand diamètre après être transportée le long de la paroi interne du tamis par une vis. La biomasse peut être transportée par un courant d'air de transport à une température inférieure à 200 °C, de préférence inférieure à 140°C, plus particulièrement comprise entre la température ambiante et 95 °C, tout particulièrement entre 40 et 95°C. la centrifugation est avantageusement suivie d'un séchage-broyage par attrition.

Le broyeur-sécheur par attrition est avantageusement un broyeur-sécheur de type Attritor tel que décrit ci-dessus comportant un tambour plat fixe supportant les organes de broyage fixes sur ses deux flancs, un disque tournant dans ledit tambour, définissant ainsi de part et d'autre une première cage dite cage de démottage et une deuxième cage, et supportant les organes de broyage mobiles, le disque tournant à des vitesses de l'ordre de 500 à 3500 t/min, de préférence de l'ordre de 700 à 1900 t/min, et un conduit d'alimentation de biomasse en suspension dans un courant gazeux, de préférence chaud, à proximité de l'axe de rotation, dans la première cage, et un conduit de déchargement de matière en suspension dans un courant gazeux, de la deuxième cage à proximité de l'axe de rotation.

L'installation de l'invention peut encore comporter, entre la centrifugation et le broyage-séchage par attrition, un appareil de séchage intermédiaire à l'aide d'un gaz chaud à basse température, notamment à moins de 200°C, de préférence à moins de 140, notamment à une température comprise entre la température ambiante et 95°C. Diverses alternatives pour un tel équipement sont décrites ci-dessus.

Finalement, l'installation de l'invention peut encore comporter en aval du broyeur-sécheur par attrition, un appareil de séchage d'appoint par gaz chaud à basse température, notamment inférieure à 200 °C, plus particulièrement inférieure à 140 °C, notamment compris entre la température ambiante et 95 °C, avantageusement de l'ordre de 40 à 95 °C. Cet appareil de séchage d'appoint peut avantageusement consister en un appareil de séchage à lit fluidisé, plus particulièrement à plateau micro-perforé oscillovibrant connu en soi.

La présente invention est décrite plus en détails ci-dessous, à l'appui de dessins dans lesquels :
La figure 1 représente un schéma fonctionnel d'une installation selon l'invention ;
La figure 2 est une coupe longitudinale au travers d'une essoreuse à tamis tronconique alimentée axialement en continu ;

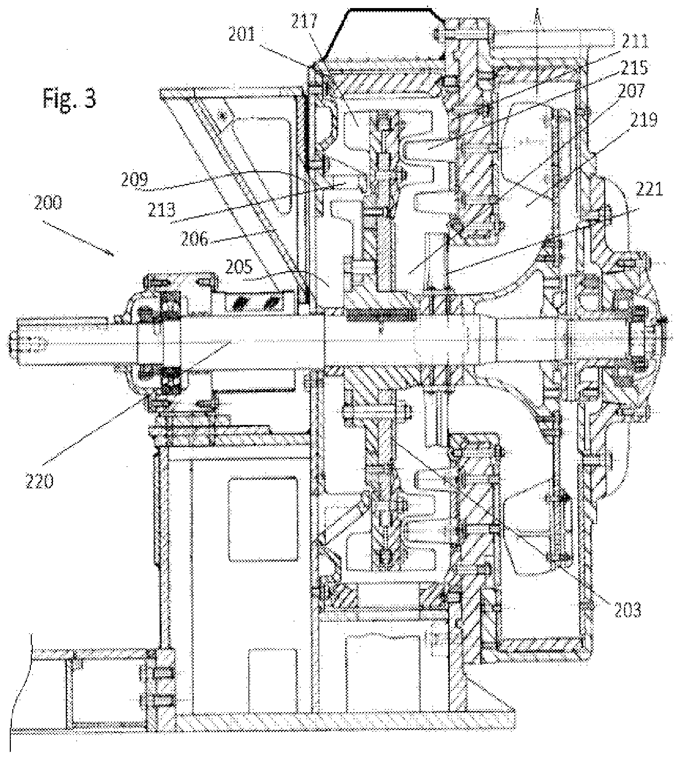

La figure 3 est une coupe longitudinale au travers d'un broyeur-attriteur utilisé dans le cadre de l'invention ; et

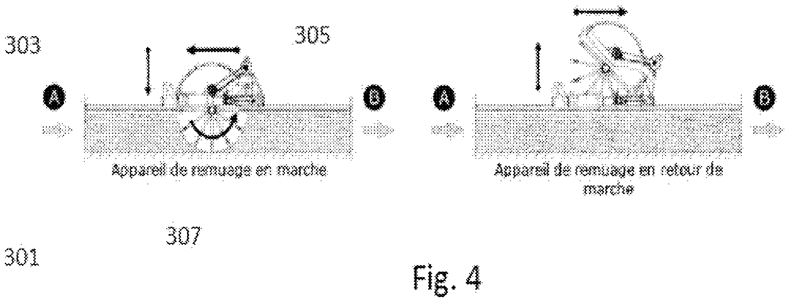

La figure 4 est une représentation schématique d'une dalle active du type « allée-tranchée ».

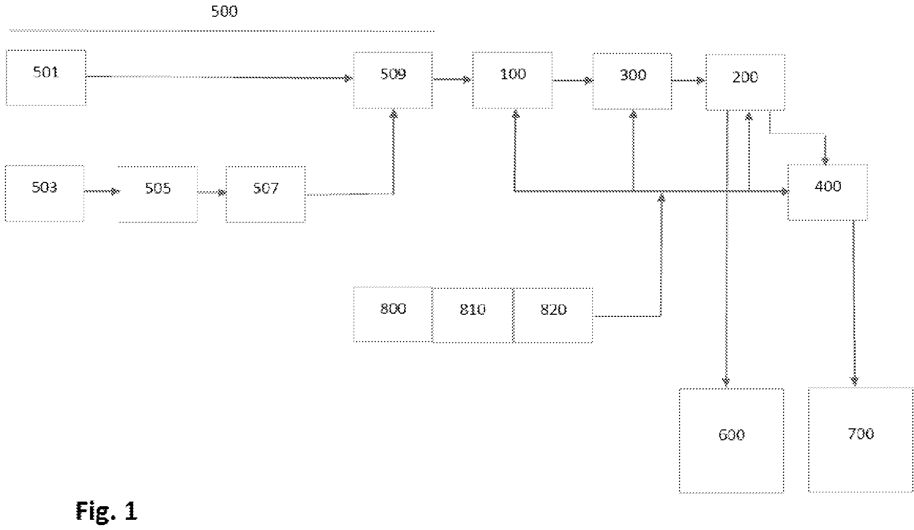

En référence à la figure 1, le schéma fonctionnel montre les diverses étapes de préparation de biomasse, notamment de plaquette de bois, aussi appelées copeaux, bois déchiqueté ou chips de bois, par centrifugation 100 et broyage-attrition 200 avant introduction dans le formage de granules combustibles 600 (communément appelés « pellets ») ou dans la transformation par torréfaction ou carbonisation pour la production de biocarbone ou charbon de bois 700. Le procédé de préparation de biomasse représenté comporte encore avantageusement une étape de séchage intermédiaire 300 et une étape de séchage d'appoint 400. Il est bien entendu qu'afin de pouvoir générer un produit de qualité la plus constante possible, il y a lieu de collecter, stocker, déchiqueter et mélanger des matières de départ, le plus uniformément possible - voir collectivement en 500. De préférence, le stockage est effectué de manière à éviter la fermentation biologique. Dans l'exemple, la matière lignocellulosique est du bois, provenant notamment de régions nordiques. On peut aussi transformer d'autres biomasses lignocellulosiques, comme de la paille ou de la bagasse de canne à sucre. Le bois peut avantageusement être déchiqueté à l'endroit de la coupe puis transporté et stocké sous forme de chips forestiers 501. On peut aussi transporter et ensuite stocker le bois sous forme de rondins ou billons ; on peut alors écorcer 505 les billons et/ou les déchiqueter en chips de dimensions voulues sur le site - voir 507, éventuellement avec des stockages tampons intermédiaires. Les biomasses de diverses origines, comme des essences de bois différentes, peuvent ensuite être mélangées 509 avant d'être traitées selon l'invention. A cet effet, on peut utiliser des procédés et équipements connus pour ce faire.

Comme on le verra ci-dessous, la biomasse est transportée dans l'installation selon l'invention à l'aide de gaz chaud, notamment de l'air, à basse température, notamment inférieure à 140°C , plus particulièrement inférieur à 95°C; ce qui permet d'utiliser des thermies faibles. Il y a donc lieu de prévoir un bloc thermique 800 pour le chauffage de l'air, équipé d'échangeurs 810 pour la récupération de calories de l'air évacué et d'un équipement de gestion approprié 820. L'air chaud est distribué de façon appropriée par les conduits adéquats 833, 835, 837 et 839 vers les diverses étapes du procédé de l'invention.

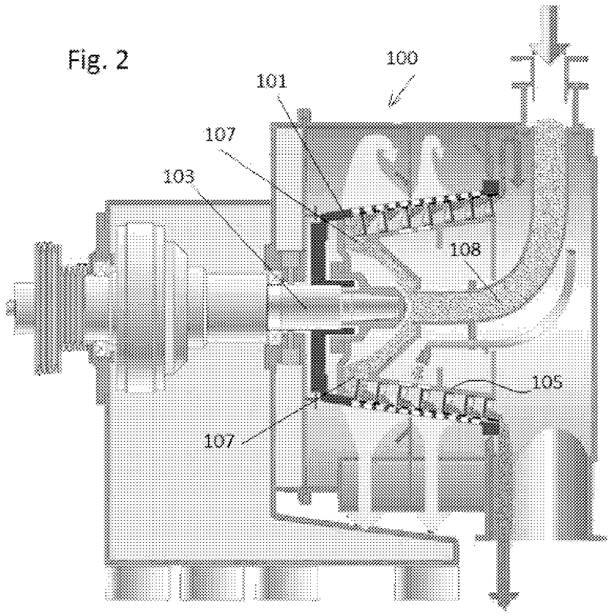

Selon l'invention, la centrifugation est avantageusement effectuée dans une centrifugeuse du type Conturbex (dénomination commerciale de Siebtechnik) dont la figure 2 montre une coupe axiale schématique. Un tamis tronconique 101 est monté en porte-à-faux sur un axe de rotation 103 qui peut tourner à des vitesses générant des forces centrifuges de l'ordre de 1800 à 2000 G. L'axe de rotation porte également une vis tronconique 105 qui tourne à une vitesse inférieure à celle du tamis 101. A l'endroit du petit diamètre, la vis tronconique 105 comporte des ouvertures de passage 107. La biomasse en suspension dans un courant d'air chaud à basse température, c'est-à-dire inférieure à 140°C, avantageusement comprise entre 40 à 95°C, est alimentée axialement par un conduit 109 qui décharge la biomasse à l'endroit du petit diamètre de la vis tronconique 105. La biomasse est envoyée par la force centrifuge au travers des ouvertures 107 sur le tamis 101. La vis 105 la transporte le long de la paroi interne du tamis 101 pour la décharger à l'endroit du plus grand diamètre. La force centrifuge appliquée à la biomasse tout au long de son trajet le long du tamis 101 extrait l'eau des particules solides qui peut ensuite être évacuée, éventuellement après en avoir récupéré les calories et/ou des fluides spécifiques intéressant à récupérer économiquement. L'air de transport chaud peut être recyclé ou peut passer dans un échangeur afin de récupérer les calories qui y sont contenues en vue d'une réutilisation dans le procédé de l'invention ou être envoyé dans l'un des équipements de la ligne de préparation. Cette machine est connue en soi, mais n'a pas été utilisée aux fins ici prévues. Elle est robuste, permet un débit important tout à fait approprié aux fins du procédé de l'invention sans modification autre que les adaptations de routine, et demande peu d'entretien. Le réglage de la vitesse de la vis indépendamment de la vitesse du tamis permet une flexibilité du réglage de la déshydratation par réglage du temps de séjour de la biomasse dans la centrifugeuse. On a constaté que la centrifugation 100 peut ainsi extraire 8 à 20 % en poids de l'eau contenue dans les particules de bois, l'entièreté de l'eau libre mais aussi une partie significative de l'eau liée. Selon les réglages, le taux hygrométrique et les dimensions des particules de bois envoyées dans la centrifugeuse, éventuellement après un prétraitement adéquat, on peut amener une charge qui contient de 50 à 65 % en poids d'eau à une teneur en eau de l'ordre de 25 à 45 % en poids.

On sait que la capacité d'extraire l'eau dépend dans une large mesure de la granulométrie et de la porosité. La granulométrie des particules de biomasse entrantes est choisie en fonction des données économiques de déchiquetage et des exigences quant à l'usage final de ladite biomasse ainsi préparée. Au vu des coûts de fonctionnement relativement peu élevés de cette première étape de centrifugation, il est avantageux de pousser la déshydratation assez loin sur des particules relativement grossières. Dans l'exemple d'exécution, on a fonctionné avec des particules déchiquetées du type chips répondant aux normes papetières, voir aussi la norme EN 14961. On a plus particulièrement utilisé des plaquettes de bois ayant une longueur inférieure à 63 mm et une épaisseur de l'ordre du centimètre. Un déchiquetage plus fin (soit fournissant des particules ayant essentiellement la même épaisseur mais une longueur inférieure à 45 mm) améliore la déshydratation en centrifugeuse. Des particules plus grossières demanderont un temps de séjours plus étendu, pour un même résultat granulométrique final. Alors que la centrifugation est normalement utilisée pour séparer une quantité réduite de solides d'une grande quantité de liquide, on utilise ici la centrifugation pour séparer une quantité réduite de liquide d'une quantité importante de solides.

Le broyage par attrition est connu en soi mais, à ce jour, ne semble pas avoir été pratiqué sur des biomasses lignocellulosiques ni pour des granulométries aussi grossières pouvant aller largement au delà de 80 mm , sachant qu'il est généralement utilisé pour une réduction de solides en fines. Il a l'avantage de broyer les particules de biomasse à granulométrie voulue tout en générant de la chaleur interne par frottement des particules les unes sur les autres. On arrive ainsi à chauffer les particules de matière à coeur pour en extraire une quantité appréciable d'eau liée et constitutive entraînée et évacuée par un courant d'air chaud à basse température. Selon la forme d'exécution retenue dans l'exemple, l'appareil de broyage-attrition consiste en un broyeur-attriteur de type Attritor 20A, comportant un cylindre fixe 201 relativement plat et un disque rotatif coaxial 203. Le disque rotatif 203 divise le volume du cylindre fixe 201 en deux cages 205,207, de part et d'autre du disque 203. Les flancs 209 et 211 du cylindre 201 comportent des broches dites fixes 213 et 215 et le disque rotatif comporte, des deux côtés, des broches dites mobiles 217. La biomasse est alimentée sous forme d'un courant de gaz chaud transportant la biomasse en suspension, dans un conduit 206, d'un côté du cylindre fixe 201 par le flanc 209, à proximité de l'axe central 220. Elle est entraînée par le courant gazeux et la force centrifuge générée par le disque rotatif 203 et ses broches 217 vers la périphérie du cylindre fixe 201. Lors du passage dans la première cage 205, la biomasse est broyée entre les plots fixes 213 et les plots mobiles 217. Elle est ensuite entraînée à contourner le disque rotatif 203 et passer dans la cage 207 pour ensuite être évacuée par le diaphragme filtrant de sortie 221, par le conduit 219. Ledit diaphragme filtrant laisse passer les particules ayant les dimensions recherchées, mais les particules trop grossières sont entrainées par la force centrifuge dans un courant gazeux particulièrement agité à l'endroit des plots 211,217 qui permet le broyage par attrition des particules. Les particules broyées de façon appropriée sont finalement emportées par le courant chaud au travers du tamis 221. On a observé qu'il est entièrement possible d'extraire de 8 à 30 % en poids d'humidité de façon économiquement rentable dans cette étape.

Dans l'exemple d'exécution décrit, le gaz de transport est de l'air chaud présentant une différence de température avec la température ambiante, comprise entre 40 et 95 °C, air chaud disponible dans l'installation puisque également utilisé pour le transport de biomasse dans la centrifugeuse. Il est bien entendu que l'opération de séchage broyage par attrition peut fonctionner avec de l'air à température ambiante. On peut aussi avantageusement transporter la biomasse dans un courant de gaz de combustion de la chaudière (à faible teneur ou en absence d'oxygène) servant à générer l'air chaud par exemple. L'homme de l'art pourra combiner les diverses variantes selon les exigences du procédé, du budget disponible et des exigences environnementales et économiques du cas d'application.

Selon le procédé de l'exemple, une étape de séchage intermédiaire 300 est prévue entre la centrifugation 100 et le broyage-attrition 200. Dans l'exemple d'exécution, cette étape est effectuée sur une dalle active automatisée. Ce dispositif consiste en une dalle 301 sur laquelle est entreposée un tas de biomasse 303 sur une hauteur d'environ 3000 mm. Un dispositif de remuage 305 se déplace le long du tas de matière 303 afin de le retourner, remuer et aérer. Cette aération de la biomasse entreposée permet d'évacuer de l'eau qui y est contenue, et ce à température ambiante ou à une température supérieure, de préférence peu élevée, à savoir de l'ordre de 40 à 95 °C. Le dispositif de remuage 305 peut comporter un cylindre à palettes 307 qui tourne dans la matière pour la retourner. D'autres dispositifs de remuage peuvent bien entendu aussi trouver application dans cette étape. L'efficacité du procédé dépend en partie de l'évacuation de l'air chargé d'humidité ; il est donc essentiel de prévoir une ventilation adéquate de l'endroit dans lequel se trouve cette dalle active.

Un séchage intermédiaire peut être avantageux, notamment si la biomasse à la sortie du broyeur par attrition doit présenter un degré hygrométrique très bas, de l'ordre de quelques pourcents. Ce séchage intermédiaire peut alors être dimensionné en fonction du résultat voulu à la sortie du broyeur 200.

A la sortie de l'étape de broyage par attrition, la matière peut déjà convenir pour la transformation ultérieure. Notamment lorsque l'on cherche à produire des granules combustibles (pellets), on peut transférer la biomasse obtenue à la sortie de l'étape de broyage-attrition directement dans le processus de transformation, notamment par compactage.

Dans certains cas d'application, et notamment lorsque l'on cherche à torréfier ou carboniser la biomasse, par exemple en vue de la production de biocarbone, il est préférable de pousser le séchage plus loin. Dans l'exemple d'exécution on a prévu une étape de séchage d'appoint, par exemple en lit fluidisé 400, afin d'obtenir le taux hygrométrique optimum. Un tel dispositif est connu en soi et ne nécessite aucune description particulière. Il est juste noté que l'air de suspension est avantageusement à une température inférieure à 140 °C, de préférence de l'ordre de 40 à 95 °C.

L'énergie globale (électrique et thermique) nécessaire pour cette préparation de biomasse est réduite d'au moins env. 50% par rapport aux procédés conventionnels.

Comme déjà mentionné, on peut aussi transporter la biomasse lignocellulosique à l'aide de gaz de combustion dans le broyeur par attrition. Ces gaz sont assez chauds et peuvent donc faciliter le séchage. Le risque d'auto-inflammation et de formation de goudrons est assez réduit puisque ces gaz ne contiennent pas ou peu d'oxygène.

Comme il résulte de la description de l'invention, celle-ci concerne également une installation plus simple que celle de l'exemple décrit ci-dessus. On compare ci-dessous une installation de l'invention pour la préparation de biomasse, comportant une centrifugeuse de type Conturbex 520 (dénomination commerciale) qui peut traiter jusqu'à 20 m3 de matière/h. La biomasse traitée a été déchiquetée au préalable à une taille de plaquettes de bois inférieure à 63 mm de longueur avec une épaisseur de l'ordre du centimètre et présente une densité de 200-300 kg/m3. Cette machine peut donc traiter de 4 à 6 t de biomasse/h. La biomasse lignocellulosique peut être chargée de 40 à 90 % d'eau et on a déterminé que la centrifugeuse susmentionnée permet une extraction jusqu'à une teneur résiduelle de 30-40 %. Une alimentation de 5t/h permet donc d'extraire entre 0.5 et 2.5 T d'eau, en fonction de la charge d'eau initiale de la matière. La puissance de la Conturbex 520 est de 22 KW/h, elle consommera donc effectivement en moyenne 14,3 KW/h (facteur de 0.65 entre la valeur nominale et la moyenne) pour une capacité d'extraction de 500 à 2000 l.

A titre d'exemple conservateur, en considérant 5 t/h de matière entrante à 50 % de masse en eau, une extraction de minimum 10 % soit 250 l, une *Conturbex* 520 consommera en moyenne 57,2 KW par tonne d'eau évacuée.

Les procédés thermiques permettant le séchage consomment généralement entre 1 et 1,5 MW par tonne d'eau évaporée. La réduction de consommation énergétique est donc d'un facteur minimum de 17,5 .

De manière similaire, une installation de traitement de biomasse selon l'invention comportant un broyeur par attrition se distingue également par une consommation énergétique réduite pour un séchage voulu, en comparaison avec les traitements thermiques classiques. A titre d'exemple, un broyeur du type Atritor 18A (dénomination commerciale) permet d'affiner la matière préalablement déchiquetée comme décrit ci-dessus, à la granulométrie souhaitée (0,1 à 30 mm) en un seul passage, avec un rendement de 24 t/h. La puissance installée de l'*Atritor 18A* est de 160 KW/h. Pour réaliser la même opération en broyage conventionnel (marteaux, fléaux, couteaux), une proposition retenue pour sa capacité de traitement, sa puissance et son prix intéressants, fait appel à deux broyeurs consécutifs de 370 KW/h chacun, avec un rendement de 18 t/h, ce qui porte la consommation moyenne à 26,7 KW par tonne affinée. L'Atritor 18A permet d'atteindre le résultat avec 4,3 KW / tonne ; la réduction énergétique est donc d'un facteur 6.

Pour l'opération concomitante de séchage dans l'*Atritor,* on a constaté une réduction du poids en eau de 6 à 10 % selon les matières, par échauffement interne sous pression atmosphérique, sans apport de chaleur extérieure. On a également constaté qu'avec un apport de chaleur extérieur, le rendement du séchage au travers du broyage par attrition permettait d'obtenir une efficacité de l'ordre de 0,75 MW/ tonne d'eau évacuée.

Il est vrai que dans les autres broyeurs on observe également une perte de masse en eau, mais limitée à 2 - 3 %. La perte d'eau est 2 à 3 fois supérieure dans l'exemple susmentionné. Pour la partie de séchage au moyen d'un apport thermique extérieur, l'efficacité de séchage avec *Atritor* est de 1,5 à 2 fois supérieure aux autres technologies.

Dans le cadre de cette comparaison, il y a encore lieu de noter que l'entretien d'un broyeur est généralement lourd et exige des interventions régulières. Par contre, le broyeur par attrition, notamment le broyeur Atritor susmentionné ne demande qu'un entretien léger à intervalles espacés. En outre, il permet de travailler sous atmosphère contrôlée ; ce qui est plutôt peu réaliste dans le cas des broyeurs classiques autres que Atritor, alors que cette forme d'exécution peut s'avérer particulièrement importante dans le cadre de l'invention.

## Revendications

1. Procédé de préparation de biomasse lignocellulosique, la biomasse étant sous forme de particules ayant une granulométrie du type P16, P31,5, P45, P63 ou P100 selon la norme EN14961 et appartenant au groupe constitué du bois et des résidus de cultures lignocellulosiques comme la paille ou la bagasse de canne à sucre, le procédé de préparation comprenant un procédé d'extraction d'eau hors des particules de biomasse, **caractérisé en ce que** le procédé d'extraction d'eau comporte une centrifugation de la biomasse suivie d'un broyage-séchage par attrition, et **en ce que** la biomasse en est extraite à une dimension de particules de l'ordre du millimètre au centimètre, de 0,1 à 30 mm.

2. Procédé selon la revendication 1 **caractérisé en ce que** la centrifugation est effectuée dans une essoreuse à tamis (100) tournant à une vitesse générant une force centrifuge supérieure à 1000 G, avantageusement supérieure à 1200 G, de préférence supérieure à 1500 G, tout particulièrement supérieure à 2500 G.

3. Procédé selon la revendication 2 **caractérisé en ce que** la centrifugation est effectuée dans une essoreuse (100) à tamis (101) à axe horizontal, alimentée en continu par un flux de biomasse (108) à l'endroit du petit diamètre, la biomasse à humidité réduite étant récupérée à l'endroit du grand diamètre.

4. Procédé selon la revendication 3 **caractérisé en ce que** l'air de transport de la biomasse est à une température inférieure à 200°C, avantageusement à une température inférieure à 140°C, de préférence comprise entre la température ambiante et 95°C, plus particulièrement entre 40 et 95 °C.

5. Procédé selon l'une des revendications 1 à 4 **caractérisé en ce que** la centrifugation réduit le taux d'humidité de la biomasse de 8 à 20%, pour la porter à moins de 50%, avantageusement moins de 45%, de préférence moins de 40, 35 ou 30 % en poids.

6. Procédé selon l'une des revendications 1 à 5 **caractérisé en ce que** le broyage-séchage par attrition réduit la taille des particules de biomasse admises dans l'étape de broyage-séchage par attrition, et sèche à coeur la biomasse suite à l'exposition à la chaleur générée par le broyage et l'attrition, le broyage-séchage étant effectué dans un broyeur par attrition du type Attritor (200) comportant un tambour plat fixe (201) supportant les organes de broyage fixes (213,215) sur ses deux flancs et un disque (203) tournant dans ledit tambour (201), définissant ainsi de part et d'autre une première cage (205) et une deuxième cage (207), et supportant les organes de broyage mobiles (217), le disque tournant à des vitesses de l'ordre de 500 à 2000 t/min, de préférence de l'ordre de 700 à 1900 t/min, et la matière étant amenée par un flux fluide, à proximité de l'axe de rotation, dans la première cage, broyée grossièrement dans celle-ci et transportée vers la périphérie du tambour pour contourner le disque et passer dans la deuxième cage, pour finalement être expulsée de la deuxième cage par le flux fluide à proximité de l'axe de rotation au travers d'un diaphragme réglable.

7. Procédé selon les revendications 1 ou 6 **caractérisé en ce que** le broyage-séchage par attrition réduit le taux d'humidité de la biomasse de 8 à 30 % en poids, de préférence de 10 à 25 % en poids.

8. Procédé selon l'une des revendications précédentes, **caractérisé en ce qu'**il comporte entre la centrifugation et le broyage-séchage par attrition, une étape de séchage intermédiaire à l'aide d'un gaz chaud à basse température, notamment à moins de 200°C, de préférence à moins de 140 °C.

9. Procédé selon la revendication 8 **caractérisé en ce que** l'étape de séchage intermédiaire à basse température réduit le taux d'humidité de 10 à 15 % en poids.

10. Procédé selon l'une des revendications précédentes **caractérisé en ce qu'**il est suivi d'une étape de séchage d'appoint par gaz chaud à basse température, notamment inférieure à 200°C, de préférence inférieure à 140°C, plus particulièrement comprise entre la température ambiante et 95°C, tout particulièrement entre 40 et 95°C, de préférence à lit fluidisé oscillo-vibrant.

11. Procédé selon l'une des revendications précédentes comportant finalement une étape de torréfaction ou carbonisation, ou une étape de mise en forme ou de fabrication de matériaux de construction.

12. Installation pour la préparation de biomasse lignocellulosique, la biomasse appartenant au groupe constitué du bois et des résidus de cultures lignocellulosiques comme la paille ou la bagasse de canne à sucre, **caractérisé en ce qu'**il comporte au moins un dispositif de déchiquetage configuré pour produire, en sortie, une biomasse ayant une granulométrie du type P16, P31,5, P45, P63 ou P100 selon la norme EN14961, et une centrifugeuse à tamis (100) suivie d'un broyeur-sécheur par attrition (200) configuré pour que la biomasse soit extraite à une dimension de particules de l'ordre du millimètre au centimètre, 0,1 à 30 mm.

13. Installation selon la revendication 12 **caractérisée en ce que** la centrifugeuse à tamis (100) tourne à une vitesse de rotation générant une force centrifuge d'au moins 1000 G, de préférence d'au moins 1200 G.

14. Installation selon la revendication 13 **caractérisée en ce que** la centrifugeuse à tamis (100) comporte un tamis tronconique (101) à axe horizontal, alimenté en continu par un flux (109) de biomasse à l'endroit du petit diamètre, la biomasse à humidité réduite étant récupérée à l'endroit du grand diamètre.

15. Installation selon la revendication 12 ou 13 **caractérisée en ce que** la biomasse est transportée par un courant gazeux à une température inférieure à 200°C, de préférence inférieure à 140°C.

16. Installation selon la revendication 12 ou 13 **caractérisée en ce que** le broyeur-sécheur par attrition (200) est un broyeur-sécheur de type Attritor comportant un tambour plat fixe (201) supportant les organes de broyage fixes (213,215) sur ses deux flancs, un disque (203) tournant dans ledit tambour, définissant ainsi de part et d'autre une première cage (205) et une deuxième cage (207), et supportant les organes de broyage mobiles (217), le disque (203) tournant à des vitesses de l'ordre de 500 à 2000 t/min, de préférence de l'ordre de 700 à 1900 t/min, et un conduit d'alimentation (206) de biomasse en suspension dans un courant gazeux, à proximité de l'axe de rotation, dans la première cage (205), et un conduit de déchargement (219) de matière en suspension dans un courant gazeux, de la deuxième cage (207) à proximité de l'axe de rotation (220).

17. Installation selon l'une des revendications 12 à 16, **caractérisée en ce qu'**elle comporte, entre la centrifugation et le broyage-séchage par attrition, un appareil de séchage (300) à l'aide d'un gaz chaud à basse température, notamment à moins de 200°C, de préférence à moins de 140°C.

18. Installation selon l'une des revendications 12 à 17, **caractérisée en ce qu'**elle comporte, en aval du broyeur-sécheur par attrition, un appareil de séchage d'appoint (400) par gaz chaud à basse température, notamment inférieure à 200°C, de préférence inférieure à 140°C, plus particulièrement comprise entre la température ambiante et 95°C, tout particulièrement entre 40 et 95°C, notamment à lit fluidisé oscillo-vibrant.

## Patentansprüche

1. Verfahren zum Herstellen von lignocellulosehaltiger Biomasse, wobei die Biomasse in Form von Teilchen vorliegt, die eine Korngröße vom Typ P16, P31,5, P45, P63 oder P100 nach der Norm EN14961 aufweisen und zu der Gruppe gehört, die aus Holz und lignocellulosehaltigen Pflanzenrückständen wie Stroh oder Zuckerrohr-Bagasse besteht, wobei das Herstellungsverfahren ein Verfahren zum Extrahieren von Wasser aus den Biomasseteilchen umfasst, **dadurch gekennzeichnet, dass** das Verfahren zum Extrahieren von Wasser ein Zentrifugieren der Biomasse gefolgt von einem Reibmahltrocknen umfasst, und dadurch, dass die Biomasse daraus in einer Teilchengröße in der Größenordnung vom Millimeter bis zum Zentimeter, von 0,1 bis 30 mm, extrahiert wird.

2. Verfahren nach Anspruch 1, **dadurch gekennzeichnet, dass** das Zentrifugieren in einer Siebschleuder (100) durchgeführt wird, die mit einer Geschwindigkeit dreht, welche eine Zentrifugalkraft von größer als 1000 G, vorteilhafterweise größer als 1200 G, bevorzugt größer als 1500 G, ganz besonders größer als 2500 G, erzeugt.

3. Verfahren nach Anspruch 2, **dadurch gekennzeichnet, dass** das Zentrifugieren in einer Schleuder (100) mit Sieb (101) mit horizontaler Achse durchgeführt wird, die an der Stelle des kleinen Durchmessers kontinuierlich mit einem Biomassestrom (108) beschickt wird, wobei die Biomasse mit reduzierter Feuchtigkeit an der Stelle des großen Durchmessers abgesammelt wird.

4. Verfahren nach Anspruch 3, **dadurch gekennzeichnet, dass** die Luft zum Transportieren der Biomasse eine Temperatur von kleiner als 200 °C, vorteilhafterweise eine Temperatur von kleiner als 140 °C, bevorzugt im Bereich zwischen der Umgebungstemperatur und 95 °C, spezieller zwischen 40 und 95 °C, aufweist.

5. Verfahren nach einem der Ansprüche 1 bis 4, **dadurch gekennzeichnet, dass** das Zentrifugieren den Feuchtigkeitsgehalt der Biomasse um 8 bis 20 % reduziert, um sie auf weniger als 50 %, vorteilhafterweise weniger als 45 %, bevorzugt weniger als 40, 35 oder 30 Gew.-% zu bringen.

6. Verfahren nach einem der Ansprüche 1 bis 5, **dadurch gekennzeichnet, dass** das Reibmahltrocknen die Größe der Biomasseteilchen, die in den Schritt des Reibmahltrocknens eingelassen werden, reduziert und die Biomasse infolge der Exposition gegenüber der durch das Mahlen und das Reiben erzeugten Wärme innigst trocknet, wobei das Mahltrocknen in einer Reibmühle vom Typ Attritor (200) durchgeführt wird, die eine feste flache Trommel (201) umfasst, welche die festen Mahlorgane (213, 215) an ihren zwei Flanken und eine sich in der Trommel (201) drehende Scheibe (203) trägt, die somit auf beiden Seiten ein erster Käfig (205) und ein zweiter Käfig (207) definiert, und die beweglichen Mahlorgane (217) trägt, wobei die Scheibe mit Geschwindigkeiten in der Größenordnung von 500 bis 2000 U/min, bevorzugt in der Größenordnung von 700 bis 1900 U/min, dreht und das Material durch einen Fluidstrom in der Nähe der Drehachse in den ersten Käfig gebracht, in diesem grob gemahlen und zum Umfang der Trommel transportiert wird, um die Scheibe zu umgehen und in den zweiten Käfig zu gelangen, um schließlich durch den Fluidstrom in der Nähe der Drehachse durch eine einstellbare Blende aus dem zweiten Käfig ausgestoßen zu werden.

7. Verfahren nach den Ansprüchen 1 oder 6, **dadurch gekennzeichnet, dass** das Reibmahltrocknen den Feuchtigkeitsgehalt der Biomasse um 8 bis 30 Gew.-%, bevorzugt um 10 bis 25 Gew.-%, reduziert.

8. Verfahren nach einem der vorstehenden Ansprüche, **dadurch gekennzeichnet, dass** es zwischen dem Zentrifugieren und dem Reibmahltrocknen einen Schritt des Zwischentrocknens mithilfe eines Heißgases bei niedriger Temperatur, insbesondere bei weniger als 200 °C, bevorzugt bei weniger als 140 °C, umfasst.

9. Verfahren nach Anspruch 8, **dadurch gekennzeichnet, dass** der Schritt des Zwischentrocknens bei niedriger Temperatur den Feuchtigkeitsgehalt um 10 bis 15 Gew.-% reduziert.

10. Verfahren nach einem der vorstehenden Ansprüche, **dadurch gekennzeichnet, dass** ihm ein Schritt des zusätzlichen Trocknens mit Heißgas bei niedriger Temperatur, insbesondere kleiner als 200 °C, bevorzugt kleiner als 140 °C, spezieller im Bereich zwischen der Umgebungstemperatur und 95 °C, ganz besonders zwischen 40 und 95 °C, bevorzugt mit oszillierend-vibrierender Wirbelschicht, folgt.

11. Verfahren nach einem der vorstehenden Ansprüche, das schließlich einen Schritt des Röstens oder Verkohlens, oder einen Schritt des Formens oder der Fertigung von Baumaterialien umfasst.

12. Anlage zur Herstellung von lignocellulosehaltiger Biomasse, wobei die Biomasse zu der Gruppe gehört, die aus Holz und lignocellulosehaltigen Pflanzenrückständen wie Stroh oder Zuckerrohr-Bagasse besteht, **dadurch gekennzeichnet, dass** sie mindestens eine Zerkleinerungsvorrichtung, die so konfiguriert ist, dass sie am Ausgang eine Biomasse produziert, die eine Korngröße vom Typ P16, P31,5, P45, P63 oder P100 nach der Norm EN14961 aufweist, und eine Siebzentrifuge (100) gefolgt von einem Reibmahltrockner (200) umfasst, der so konfiguriert ist, dass die Biomasse in einer Teilchengröße in der Größenordnung vom Millimeter bis zum Zentimeter, 0,1 bis 30 mm, extrahiert wird.

13. Anlage nach Anspruch 12, **dadurch gekennzeichnet, dass** die Siebzentrifuge (100) mit einer Drehgeschwindigkeit dreht, welche eine Zentrifugalkraft von mindestens 1000 G, bevorzugt von mindestens 1200 G, erzeugt.

14. Anlage nach Anspruch 13, **dadurch gekennzeichnet, dass** die Siebzentrifuge (100) ein kegelstumpfförmiges Sieb (101) mit horizontaler Achse umfasst, das an der Stelle des kleinen Durchmessers kontinuierlich mit einem Biomassestrom (109) beschickt wird, wobei die Biomasse mit reduzierter Feuchtigkeit an der Stelle des großen Durchmessers abgesammelt wird.

15. Anlage nach Anspruch 12 oder 13, **dadurch gekennzeichnet, dass** die Biomasse von einer Gasströmung mit einer Temperatur von kleiner als 200 °C, bevorzugt kleiner als 140 °C, transportiert wird.

16. Anlage nach Anspruch 12 oder 13, **dadurch gekennzeichnet, dass** der Reibmahltrockner (200) ein Mahltrockner vom Typ Attritor ist, der eine feste flache Trommel (201), welche die festen Mahlorgane (213, 215) an ihren zwei Flanken trägt, eine sich in der Trommel (201) drehende Scheibe (203), die somit auf beiden Seiten einen ersten Käfig (205) und einen zweiten Käfig (207) definiert, und die beweglichen Mahlorgane (217) trägt, wobei die Scheibe (203) mit Geschwindigkeiten in der Größenordnung von 500 bis 2000 U/min, bevorzugt in der Größenordnung von 700 bis 1900 U/min, dreht, und eine in einer Gasströmung hängende Leitung zum Beschicken (206) mit Biomasse in der Nähe der Drehachse im ersten Käfig (205) und eine in einer Gasströmung hängende Leitung (219) zum Austragen von Material aus dem zweiten Käfig (207) in der Nähe der Drehachse (220) umfasst.

17. Anlage nach einem der Ansprüche 12 bis 16, **dadurch gekennzeichnet, dass** sie zwischen dem Zentrifugieren und dem Reibmahltrocknen eine Einrichtung zum Trocknen (300) mithilfe eines Heißgases bei niedriger Temperatur, insbesondere bei weniger als 200 °C, bevorzugt bei weniger als 140 °C, umfasst.

18. Anlage nach einem der Ansprüche 12 bis 17, **dadurch gekennzeichnet, dass** sie stromabwärts des Reibmahltrockners eine Einrichtung zum zusätzlichen Trocknen (400) mit Heißgas bei niedriger Temperatur, insbesondere kleiner als 200 °C, bevorzugt kleiner als 140 °C, spezieller im Bereich zwischen der Umgebungstemperatur und 95 °C, ganz besonders zwischen 40 und 95 °C, insbesondere mit oszillierend-vibrierender Wirbelschicht, umfasst.

## Claims

1. A method for preparing a lignocellulosic biomass, the biomass being in the form of particles having a granulometry of the type P16, P31.5, P45, P63 or P100 in compliance with the standard EN14961 and pertaining to the group consisting in wood and residues of lignocellulosic cultures, such as straw or sugar cane bagasse, the preparing method comprising a method for extracting water out of the biomass particles, **characterized in that** the water extracting method comprises a centrifugation of the biomass followed by an attrition crushing-drying, and **in that** the biomass is extracted with a particles dimension in the range of one millimeter to one centimeter, from 0.1 to 30 mm.

2. The method according to claim 1, **characterized in that** the centrifugation is performed in a screen wringer (100) rotating at a speed generating a centrifugal force greater than 1000 G, advantageously greater than 1200 G, preferably greater than 1500 G, quite particularly greater than 2500 G.

3. The method according to claim 2, **characterized in that** the centrifugation is performed in a horizontal-axis screen (101) wringer (100), continuously supplied with a flow of biomass (108) at the small-diameter side, the moisture-reduced biomass being recovered at the large-diameter side.

4. The method according to claim 3, **characterized in that** the air for conveying the biomass is at a temperature lower than 200°C, advantageously at a temperature lower than 140°C, preferably comprised between the ambient temperature and 95°C, more particularly between 40 and 95°C.

5. The method according to any of claims 1 to 4, **characterized in that** the centrifugation reduces the moisture content of the biomass by 8 to 20 weight %, so as to bring it to lower than 50 weight %, advantageously lower than 45 weight %, preferably lower than 40, 35 or 30 weight %.

6. The method according to any of claims 1 to 5, **characterized in that** the attrition crushing-drying reduces the size of the biomass particles admitted in the attrition crushing-drying step, and heat-soaks the biomass subsequently to the exposure to the heat generated by the crushing and the attrition, the crushing-drying being performed in an Attritor-type attrition crusher (200) including a fixed flat drum (201) supporting the fixed crushing members (213, 215) on its two sidewalls and a disc (203) rotating in said drum (201), thus defining on either side a first cage (205) and a second cage (207), and supporting the movable crushing members (217), the disc rotating at speeds in the range of 500 to 2000 rpm, preferably in the range of 700 to 1900 rpm, and the matter being brought by a fluid flow, in the proximity of the axis of rotation, into the first cage, coarsely crushed in the latter and conveyed toward the periphery of the drum so as to circumvent the disc and pass into the second cage, before being finally expelled from the second cage by a fluid flow in the proximity of the axis of rotation throughout an adjustable diaphragm.

7. The method according to claims 1 or 6, **characterized in that** the attrition crushing-drying reduces the moisture content of the biomass by 8 to 30 weight %, preferably by 10 to 25 weight %.

8. The method according to any of the preceding claims, **characterized in that** it includes between the centrifugation and the attrition crushing-drying, an intermediate drying step using a hot gas at a low temperature, in particular lower than 200°C, preferably lower than 140°C.

9. The method according to claim 8, **characterized in that** the intermediate drying step at a low temperature reduces the moisture content by 10 to 15 weight %.

10. The method according to any of the preceding claims, **characterized in that** it is followed by a supplemental drying step by a low-temperature hot gas, in particular lower than 200°C, preferably lower than 140°C, more particularly comprised between the ambient temperature and 95°C, quite particularly between 40 and 95°C, preferably via an oscillo-vibratory fluidized-bed.

11. The method according to any of the preceding claims, finally including a roasting or carbonization step, or a step of forming or manufacturing building materials.

12. A facility for preparing a lignocellulosic biomass, the biomass pertaining to the group consisting in wood and residues of lignocellulosic cultures, such as straw or sugar cane bagasse, **characterized in that** it includes at least one shredding device configured to provide, at the output, a biomass having a granulometry of the type P16, P31.5, P45, P63 or P100 in compliance with the standard EN14961, and one screen centrifuge (100) followed by an attrition crusher-dryer (200) configured so that the biomass is extracted with a particles dimension in the range of one millimeter to one centimeter, from 0.1 to 30 mm.

13. The facility according to claim 12, **characterized in that** the screen centrifuge (100) rotates at a rotational speed generating a centrifugal force of at least 1000 G, preferably of at least 1200 G.

14. The facility according to claim 13, **characterized in that** the screen centrifuge (100) includes a horizontal-axis trunconical sieve (101), continuously supplied with a flow of biomass (109) at the small-diameter side, the moisture-reduced biomass being recovered at the large-diameter side.

15. The facility according to claim 12 or 13, **characterized in that** the biomass is conveyed by a gas stream at a temperature lower than 200°C, preferably lower than 140°C.

16. The facility according to claim 12 or 13, **characterized in that** the attrition crusher-dryer (200) is an Attritor-type crusher-dryer including a fixed flat drum (201) supporting the fixed crushing members (213, 215) on its two sidewalls, a disc (203) rotating in said drum, thus defining on either side a first cage (205) and a second cage (207), and supporting the movable crushing members (217), the disc (203) rotating at speeds in the range of 500 to 2000 rpm, preferably in the range of 700 to 1900 rpm, and a conduit (206) for supplying biomass in suspension in a gas stream, in the proximity of the axis of rotation, into the first cage (205), and a conduit (219) for discharging the matter in suspension in a gas stream, from the second cage (207) in the proximity of the axis of rotation (220).

17. The facility according to any of claims 12 to 16, **characterized in that** it includes, between the centrifugation and the attrition crushing-drying, a drying apparatus (300) using a hot gas at a low temperature, in particular lower than 200°C, preferably lower than 140°C.

18. The facility according to any of claims 12 to 17, **characterized in that** it includes, downstream of the attrition crusher-dryer, a supplemental drying apparatus (400) by a low-temperature hot gas, in particular lower than 200°C, preferably lower than 140°C, more particularly comprised between the ambient temperature and 95°C, quite particularly between 40 and 95°C, in particular via an oscillo-vibratory fluidized-bed.
